# EUROPEAN PATENT SPECIFICATION

(11) **EP 2 630 188 B1**
(45) Date of publication and mention of the grant of the patent: **21.01.2015**
(21) Application number: 11770771.1
(22) Date of filing: 17.10.2011
(51) Int. Cl.: C08K 3/16, C08L 77/00

(54) **HEAT STABILIZED POLYAMIDE COMPOSITION**
WÄRMESTABILISIERTE POLYAMIDZUSAMMENSETZUNG
COMPOSITION DE POLYAMIDE THERMOSTABILISÉE

(30) Priority: 18.10.2010 EP 10187866
(43) Date of publication of application: 28.08.2013
(73) Proprietor: DSM IP Assets B.V., 6411 TE Heerlen (NL)
(72) Inventor: LIGTHART, Ronald, NL-6100 AA Echt (NL); GIJSMAN, Pieter, NL-6100 AA Echt (NL)
(74) Representative: Derix, Nocky Marienna
(86) International application number: PCT/EP2011/068114
(87) International publication number: WO 2012/052403

(56) References cited:
- WO-A1-2008/115562
- WO-A1-2010/014810
- GB-A- 1 131 933
- US-A- 3 457 325

## Description

The invention relates to a heat stabilized polyamide composition.

Polymers degrade by oxidation when heated. Because of this so-called thermal degradation the mechanical properties of the polymers deteriorate, especially ultimate properties like impact strength and tensile strength. Also discoloration is in many cases an unwanted side effect of the thermal degradation of polymers. For that reason polymers are mixed with certain chemicals that act as heat stabilizer. The chemicals, indicated as anti-oxidants, are in most cases based on phenol, amine or phosphor derivatives. These anti-oxidants are also used in polyamides, next to copper salts and elementary copper. In EP 1498445 it is reported that an improved heat stabilized polyamide composition is obtained if the composition contains elementary iron.

Although good results have been obtained, there is a need for further improved heat stabilized polyamide compositions. This is because of the always increasing demands posed by the market on these compositions. Shaped objects of the compositions are exposed for long periods to elevated or high temperatures, for example under the hood in cars and in several electronic and electrical applications, but also in solar energy systems.

Object of the invention is therefore to provide a polyamide composition showing improved resistance to thermal degradation.

Surprisingly this object is obtained if the composition contains polyamide 410 (PA-410) and a copper compound and reinforcement fibers. The polymer composition shows a remarkable increase in thermal stability in view of the more regular polyamides, like for instance PA-6, PA-66, but also in view of PA-46 and the polyamides containing longer aliphatic diacids or diamines, like for instance PA-412 etc. The compositions are especially suitable for use at elevated temperatures of about 100 - 120 °C, in applications that need a very long service life.

PA-410 is a polyamide containing monomer units derived from a dicarboxylic acid with a chain of 10 carbon atoms between the carboxylic acid groups and a diamine with 4 carbon atoms. Preferably as the dicarboxylic acid 1,10 decandioic acid is used. As the diamine preferably 1,4-butanediane is used. PA-410 may comprise up to 30 wt. % of further monomeric units, for example dicarboxylic acids with less than 10 carbon atoms or diamines with more than 4 carbon atoms. Preferably the PA-410 used in the composition according to the invention comprises at least 80 wt. % of the dicarboxylic acid with a chain of 10 carbon atoms between the carboxylic acid groups and a the diamine with 4 carbon atoms, more preferably at least 90 wt. %, even more preferably at least 95 wt. %, even more preferably at least 99 wt. %, most preferably at least 99.9 wt. %.

The composition according to the invention preferably contains a copper compound and a salt containing a halogenide acid group, for example an iodide or a bromide salt. Good examples of suitable copper compounds include copper (I) halogenides, preferably copper iodide (CuI) and further copper salts like for instance copper acetate, copper sulfate and cupper stearate. As the salt containing an halogenide acid group preferably potassium bromide (KBr) of potassium iodide (KI) are used. Most preferably a combination of copper iodide and potassium iodide (CuI/KI) is used. The copper compound and the salt suitably are present in the composition according to the invention in a molar ratio of Cu : halogenide = 1 : 5 - 15. The amount of Cu preferably is between 10 - 500 ppm, based on the total of the composition, more preferably between 1 - 100 ppm, even more preferably 10 - 70 ppm. In this way the composition has for many applications an adequate level of thermal stability, while, due to the relatively low level of copper, it does not show or it shows at least to a lesser extend the disadvantages of the presence of the copper compound. These disadvantages include for instance discoloration under humid conditions or loss in electric properties, for instance tracking resistance.

Also suitable are copper complexes, for instance mentioned in WO 00/22035. Examples of the complexes include copper complexes having as complex ligand triphenylphosphine, mercaptobenzimidazole, EDTA, acetylacetonate, glycine, ethylene diamine, oxalate, diethylene triamine, triethylene tetramine, pyridine, diphosphone and dipyridyl. Preferred are triphenylphosphine, mercaptobenzimidazole, acetylacetonate and glycine.

Next to PA-410 the polymer composition according the invention may comprise one or more further polymers. The polymeric composition according to the invention may contain:
A. 20 - 100 parts by weight (pbw) of PA-410 and
B. One or more further polymers,
whereby A and B add up to 100 pbw.

Preferably A is 40 - 100 parts by weight of PA-410, more preferably 60 - 100 parts. Most preferably the polymeric part of composition consists of PA-410, which means that all 100 parts of the polymeric part of the composition are made up by PA-410.

Examples of the further polymers include polyolefins, styrene polymers and copolymers and especially further polyamides, for example PA-46, PA6-10, PA-510, and preferably PA-6 and PA-66.

The polymer composition according to the invention comprises reinforcing fibers, like aramid fibers, carbon fibers, glass fibers like for example S-glass fibers and E-glass fibers. Preferably the composition contains glass fibers. The composition may contain between 2 and 70 parts by weight of reinforcing fibers at 100 parts of A and B. Preferably the composition contains 15 - 60 wt. % of reinforcing fibers. Even more preferred, the composition contains between 2 and 70 parts by weight of glass fibers at 100 parts of A and B and most preferred the composition contains 15 to 60 wt% of glass fibers with respect to 100 parts A and B. As glass fibers normally chopped glass fibers are used. The compositions also may contain one or more fillers, for example mica, talcum, wolastonite, calcium carbonate etc. The polymer composition according to the invention are especially suitable for use at elevated temperatures of about 100 to 120 °C, in applications that need a very long service life in combination with required stiffness.

The polymer composition may further comprise the usual additives, as for example UV stabilizers, processing adds, nucleation additives etc. Preferably the composition contains at most 20 pbw of further additives at 100 pbw of component A + B, more preferably at most 10 pbw, even more preferably at most 5 pbw, most preferably at most 2 pbw.

The composition is suitable for the production of films, tubes and injection moulded articles, like for instance parts for mounting under the hood of a car and electric and electronic parts, especially parts of lighting systems, like lights of passenger cars or lamps for indoor and outdoor use or used in solar energy systems.

The invention will further be explained by the examples.

### Preparation of test samples.

As model experiments for the compositions according to the invention, compositions of PA-46, PA-66, PA-418, PA-436 (comparative experiments A-D) or PA-410 (example 1) and CuI and KI (containing 225 ppm Cu and 5600 ppm I) were prepared by using a co-rotating twin screw extruder. A strand was produced that was chopped into granulate. The granulate was compression molded into films having a thickness of 120 µm.

The films were placed in a reactor, the reactor was filled with a 100 % oxygen atmosphere of 1 bar after which the reactor was closed. After that the temperature of the reactor was kept at 120 °C for 300 hours. The pressure drop due to the reaction of the oxygen with the polyamide films was monitored. From the pressure drop the amount of oxygen that has reacted with the film was calculated. The amount of oxygen that has reacted with the film is taken as a measure for the thermal stability of the polyamide composition. The results are shown in table I.

**Table I. Thermal stability of polyamide CuI/KI compositions at 120 °C.**

| Example/ Comp. exp: | Polyamide | reacted oxygen (mmol/kg) |
|---|---|---|
| A | PA-46 | 280 |
| B | PA-66 | 300 |
| I | PA-410 | 100 |
| C | PA-418 | 360 |
| D | PA-436 | 620 |

From the results it is clear that PA-410 shows a remarkable better thermal stability than the other polyamides, both the polyamides with a relatively higher amount of amide groups and a relatively lower amount of amide groups in the polymer chain.

Injected molded plates containing PA-410 and 50 wt% glass fibers also exhibited high thermal stability at the same temperature, namely 50 mmol/kg, compared to plates of PA-66 with the same amount of glass fibers, which was 150 mmol/kg.

It is very surprising that the composition according to the invention shows the good results at moderate elevated temperature, because in literature it is reported that copper is less effective as a thermal stabilizer in these temperature regions (100 - 120 °C). A polyamide polymer composition has been obtained that is very durable at moderate elevated temperatures, compared to other polyamide compositions.

## Claims

1. Heat stabilized polyamide composition, **characterized in that** the composition contains polyamide 410 and a copper compound and reinforcement fibers.

2. Heat stabilized polyamide composition according to claim 1, wherein the composition contains a copper compound and a salt containing a halogenide acid group.

3. Heat stabilized polyamide composition according to claim 2, wherein copper iodide as copper compound and potassium iodide as the salt containing a halogenide acid group are used.

4. Heat stabilized polyamide composition according to any one of claims 1 - 3, wherein the amount of copper present in the composition is between 10 - 500 ppm.

5. Heat stabilized polyamide composition according to any one of claims 1 - 3, wherein the amount of copper present in the composition is between 10 - 100.

6. Heat stabilized polyamide composition according to any one of claims 1 - 6, wherein the composition contains between 2 - 70 wt. % of reinforcement fibers.

7. Heat stabilized polyamide composition according to any of the claims above, wherein the reinforcement fibers are glass fibers.

8. Heat stabilized polyamide composition according to any of the claims above, wherein the reinforcement fibers are glass fibers in an amount between 15 and 60 wt %.

9. Heat stabilized polyamide composition according to any of the claims above, wherein a further polymer B is present and whereby the amount of polyamide 410 and B add up to 100 parts by weight.

## Patentansprüche

1. Wärmestabilisierte Polyamidzusammensetzung, **dadurch gekennzeichnet, dass** die Zusammensetzung Polyamid 410 und eine Kupferverbindung und Verstärkungsfasern enthält.

2. Wärmestabilisierte Polyamidzusammensetzung nach Anspruch 1, wobei die Zusammensetzung eine Kupferverbindung und ein Salz mit einer Halogenidsäuregruppe enthält.

3. Wärmestabilisierte Polyamidzusammensetzung nach Anspruch 2, wobei als Kupferverbindung Kupferiodid und als Salz mit einer Halogenidsäuregruppe Kaliumiodid verwendet werden.

4. Wärmestabilisierte Polyamidzusammensetzung nach einem der Ansprüche 1-3, wobei die in der Zusammensetzung vorliegende Kupfermenge zwischen 10-500 ppm liegt.

5. Wärmestabilisierte Polyamidzusammensetzung nach einem der Ansprüche 1-3, wobei die in der Zusammensetzung vorliegende Kupfermenge zwischen 10-100 ppm liegt.

6. Wärmestabilisierte Polyamidzusammensetzung nach einem der Ansprüche 1-6, wobei die Zusammensetzung zwischen 2-70 Gew.-% Verstärkungsfasern enthält.

7. Wärmestabilisierte Polyamidzusammensetzung nach einem der obigen Ansprüche, wobei es sich bei den Verstärkungsfasern um Glasfasern handelt.

8. Wärmestabilisierte Polyamidzusammensetzung nach einem der obigen Ansprüche, wobei es sich bei den Verstärkungsfasern um Glasfasern in einer Menge zwischen 15 und 60 Gew.-% handelt.

9. Wärmestabilisierte Polyamidzusammensetzung nach einem der obigen Ansprüche, wobei ein weiteres Polymer B vorliegt und wobei sich die Menge von Polyamid 410 und B auf 100 Gewichtsteile summiert.

## Revendications

1. Composition de polyamide thermostabilisée, **caractérisée en ce que** la composition contient du polyamide 410 et un composé de cuivre et des fibres de renforcement.

2. Composition de polyamide thermostabilisée selon la revendication 1, la composition contenant un composé de cuivre et un sel contenant un groupe acide halogénure.

3. Composition de polyamide thermostabilisée selon la revendication 2, dans laquelle de l'iodure de cuivre est utilisé comme composé de cuivre et de l'iodure de potassium est utilisé comme sel contenant un groupe acide halogénure.

4. Composition de polyamide thermostabilisée selon l'une quelconque des revendications 1 à 3, la quantité de cuivre présente dans la composition étant de 10 à 500 ppm.

5. Composition de polyamide thermostabilisée selon l'une quelconque des revendications 1 à 3, la quantité de cuivre présente dans la composition étant de 10 à 100 ppm.

6. Composition de polyamide thermostabilisée selon l'une quelconque des revendications 1 à 6, la composition contenant entre 2 % et 70 % en poids de fibres de renforcement.

7. Composition de polyamide thermostabilisée selon l'une quelconque des revendications ci-dessus, les fibres de renforcement étant des fibres de verre.

8. Composition de polyamide thermostabilisée selon l'une quelconque des revendications ci-dessus, les fibres de renforcement étant des fibres de verre présentes dans une quantité entre 15 % et 60 % en poids.

9. Composition de polyamide thermostabilisée selon l'une quelconque des revendications ci-dessus, dans laquelle un polymère supplémentaire B est présent, la quantité de polyamide 410 et de polymère B totalisant ainsi 100 parties en poids.
